# EUROPÄISCHE PATENTANMELDUNG

(11) **EP 3 754 628 A1**
(43) Veröffentlichungstag der Anmeldung: **23.12.2020**
(21) Anmeldenummer: 20176503.9
(22) Anmeldetag: 26.05.2020
(51) Int. Cl.: G09B 23/30

(54) **ÜBUNGSVORRICHTUNG ZUR SIMULATION EINES DURCHSTRÖMTEN GEFÄSSBETTES UND DAZUGEHÖRIGES VERFAHREN**

(30) Priorität: 21.06.2019 DE 102019116827
(71) Anmelder: Meyer, Bernhard, 30559 Hannover (DE)
(72) Erfinder: Meyer, Bernhard, 30559 Hannover (DE); Werncke, Thomas, 16348 Wandlitz (DE)
(74) Vertreter: Horak, Michael

(57) **Zusammenfassung**

Die vorliegende Erfindung betrifft eine Übungsvorrichtung und ein dazugehöriges Verfahren zur Simulation einer statischen, dynamischen, statisch-kontrastierten und/oder dynamisch-kontrastierten Flüssigkeitsbewegung innerhalb eines dreidimensionalen (3D) Gefäßbettes.

## Beschreibung

### Kurzdarstellung der Erfindung

Die vorliegende Erfindung betrifft eine Übungsvorrichtung zur Simulation eines Gefäßbettes mit statischer und/oder dynamischer Flüssigkeitsbewegung, vorzugsweise zur Simulation einer kontrastierten statischen und/oder kontrastierten dynamischen Flüssigkeitsbewegung innerhalb des Gefäßbettes. Vor einem Eingriff bzw. der Anwendung einer Behandlung an einem lebenden Organismus, ist es von Vorteil, dass bestimmte Abläufe von Eingriffen und/oder Behandlungen an einem Übungsgerät durchgeführt werden, damit diese erlernt werden können. In der medizinischen Ausbildung können Simulationen verwendet werden, um die erforderlichen Fähigkeiten zu erlernen und/oder die eigene Leistung zu verbessern. Mithilfe kontrollierter Einstellungen sowie möglicher Wiederholungen werden zusätzlich der Stresspegel des Lernenden abgebaut, die eigenen Fähigkeiten gestärkt und/oder Sicherheit erlangt. Neben den zuvor genannten pädagogischen Vorteilen können durch Simulationen auch mögliche praktische Probleme gelöst werden.

Aus dem Stand der Technik sind komplexe Systeme bekannt, die beispielsweise mittels virtueller Simulation oder komplexer Vorrichtungsgestaltung zu einem erheblichen Kosten- und Produktionsaufwand führen. Ferner sind die Systeme auf dem Stand der Technik zumeist sehr groß, wodurch eine mobile Verwendung der Übungsvorrichtungen an unterschiedlichen Orten mit erheblichem Aufwand verbunden ist.

Die Aufgabe der vorliegenden Erfindung ist daher eine leicht transportierbare und leicht herzustellende Übungsvorrichtung zur Verfügung zu stellen, die der mobilen Simulation eines Gefäßbettes mit statischer und/oder dynamischer Flüssigkeitsbewegung, vorzugsweise zur Simulation einer kontrastierten statischen und/oder kontrastierten dynamischen Flüssigkeitsbewegung innerhalb des dreidimensionalen Gefäßbettes. Ferner soll die Übungsvorrichtung die Möglichkeit umfassen, die Simulation verschiedener radiologischer bildgebender Techniken (RBT) zu erlauben und/oder deren Bildfusion durch Anwendung von Registrierungstechniken am Angiographiegerät zu simulieren.

Die Übungsvorrichtung soll der mobilen Simulation eines Gefäßbettes mit statischer und/oder dynamischer Flüssigkeitsbewegung, vorzugsweise zur Simulation einer kontrastierten statischen und/oder kontrastierten dynamischen Flüssigkeitsbewegung innerhalb des Gefäßbettes dienen, um verschiedene radiologische bildgebende Techniken an der Übungsvorrichtung anzuwenden.

Die statische und/oder dynamische Kontrastierung der Flüssigkeit innerhalb des Gefäßbettes ermöglicht die dreidimensionale Darstellung der Übungsvorrichtung und seiner Komponenten mittels Magnetresonanztomographie (MRT), Computertomographie (CT), C-Arm Computertomographie (CACT) und Rotationsangiographie (RAX) und die zweidimensionale Darstellung mittels digitaler Radiographie (DX) und Durchleuchtung (DL).

Die dynamische Gefäßkontrastierung ermöglicht insbesondere die Erprobung typischer durchleuchtungsgestützter Arbeitstechniken wie die Durchleuchtung (DL) und die digitale Subtraktionsangiographie (DSA).

Ferner soll die Übungsvorrichtung zur Entwicklung, Erprobung und didaktischen Vermittlung von Bildfusionstechniken am Angiographiegerät durch den Einsatz von Registrierungstechniken dienen.

Die vorliegende Erfindung betrifft daher eine Übungsvorrichtung zur Simulation einer statischen und/oder dynamischen Flüssigkeitsbewegung innerhalb des Gefäßbettes, umfassend eine Nachbildung eines Gefäßbettes, das innerhalb eines Körpers angeordnet ist und durch mindestens zwei Öffnungen zum Anschluss oder zur Befüllung verbunden ist, wobei die Vorrichtung eine flache Auflagefläche aufweist, in deren Bereich innerhalb der Vorrichtung mindestens ein Objekt einer abweichenden Röntgendichte im Vergleich zum Körper und/oder dem Gefäßbett angeordnet ist. In einer bevorzugten Ausführungsform wird neben der Simulation eines Gefäßbettes mit statischer und/oder dynamischer Flüssigkeitsbewegung, die Übungsvorrichtung auch zur Simulation einer kontrastierten statischen und/oder kontrastierten dynamischen Flüssigkeitsbewegung innerhalb des Gefäßbettes verwendet. Vorzugsweise weist das Objekt eine abweichende Röntgendichte, vorzugsweise höhere Röntgendichte, im Vergleich zum Körper und/oder des Gefäßbettes auf.

In einer Ausführungsform weist die Übungsvorrichtung mindestens zwei Anschlüsse an den sich gegenüberliegenden Seiten des Körpers, der Deckplatte und der Grundplatte, auf.

Der Körper der Übungsvorrichtung ist in einer Ausführungsform aus einem Material gefertigt, das sich in der Computertomographie (CT) homogen hypodens und in der Magnetresonanztomographie hypointens darstellt, vorzugsweise wobei das Material in der Computertomographie (CT) eine homogene fett- bis weichteilähnliche Dichte von -30 bis 100 Houndsfieldeinheiten (HE) aufweist und in der Magnetresonanztomographie ein im Vergleich zu Fett hypointenses Signalverhalten aufweist. Bei dem Material handelt es sich besonders bevorzugt um ein transparentes oder eingefärbtes Kunstharz.

Das mindestens eine Objekt abweichender Röntgendichte im Vergleich zum Körper und/oder dem Gefäßbett, welches innerhalb der Übungsvorrichtung angeordnet ist, weist in einer Ausführungsform die Form von stilisierten Wirbelkörpern mit Querfortsätzen auf. Ferner weist das mindestens eine Objekt in einer bevorzugten Ausführungsform eine Röntgendichte von 400-1600 Houndsfieldeinheiten in der Computertomographie (CT) auf. Das mindestens eine Objekt weist zusätzlich besonders bevorzugt eine abweichende Signalintensität im MRT (MRSI) im Vergleich zum Körper und/oder dem Gefäßbett auf. In einer weiteren Ausführungsform steht das Objekt mit zwei weiteren baugleichen Objekten in Verbindung.

Das Gefäßbett weist in einer Ausführungsform einen dreidimensionalen Aufbau auf und umfasst ferner ein zentrales Hauptschlagaderäquivalent, mindestens einen Seitenast und mindestens einen Ableitungskanal.

Das Hauptschlagaderäquivalent besteht in einer bevorzugten Ausführungsform aus vier Abschnitten
i) einem proximalen zylindrischen Abschnitt (HSAₚᵣₒₓ), der unmittelbar an die Deckplatte anschließt und vorzugsweise eine Länge von 2 cm aufweist;
ii) einem an den HSAₚᵣₒₓ anschließenden zentralen Abschnitt (HSA_{zentral}), der vorzugsweise eine Länge von 10 cm aufweist;
iii) einem auf den HSA_{zentral} folgenden Abschnitt HSA_{red}, der zu einer Kaliberreduktion führt und vorzugsweise eine Länge von 1,5 cm aufweist; und
iv) einem distalen Abschnitt HSA_{dist}, welcher an den Anschluss ZO in der Grundplatte anschließt und vorzugsweise eine Länge von 1 cm aufweist.

Der mindestens eine Seitenast stilisiert in einer bevorzugten Ausführungsform den arteriellen Anteil des menschlichen Gefäßsystems, wobei vorzugsweise segmentale Einengungen und/oder Aufweitungen eingebracht sind, um typische Gefäßkrankheiten zu simulieren.

Der mindestens eine Ableitungskanal ist in einer Ausführungsform der vorliegenden Erfindung an einer Seite mit dem äußeren Ende des mindestens einen Seitenastes verbunden und am anderen Ende der Kanalführung mündet dieser in den distalen Abschnitt HSA_{dist}. In einer bevorzugten Ausführungsform sind die Länge und/oder der Durchmesser des mindestens einen Seitenastes und des mindestens einen Ableitungskanals derart ausgebildet, dass der summierte Flusswiderstand des mindestens einen Seitenastes und des mindestens einen Ableitungskanals derart im Verhältnis zum Flusswiderstand des Hauptschlagaderäquivalents stehen, dass eine homogene Flussverteilung der über den Anschluss ZI eingebrachten Flüssigkeit, auf den mindestens einen Seitenast und das Hauptschlagaderäquivalent erfolgt.

In einer weiteren Ausführungsform der vorliegenden Erfindung ist oberhalb des Anschlusses ZI in der Deckplatte ein Anschluss für eine Kontrastmittelinjektion eines Kontrastmitteleinbringungssystem (KMS) angeordnet. In einer bevorzugten Ausführungsform umfasst das Kontrastmitteleinbringungssystem (KMS) ferner einen Kontrastmittelzufuhrring mit Öffnungen, welcher durch eine Verbindung mit dem Gefäßbett die Einführung eines Färbemittels in das Gefäßbett ermöglicht, wobei der Kontrastmittelzufuhrring vorzugsweise
a) 1,8 cm unterhalb der Deckplatte mit dem HSAₚᵣₒₓ in Verbindung steht;
b) einen ringförmigen Hohlraum ausbildet, der den HSAₚᵣₒₓ umgibt;
c) in Richtung des HSAₚᵣₒₓ gerichtete Öffnungen aufweist, wobei diese vorzugsweise schlitzförmige Kontrastmittelzufuhraussparungen sind; und/oder
d) ein zuführender Kanal den Kontrastmittelzufuhrring mit dem Anschluss zur Kontrastmittelinjektion verbindet.

Die vorliegende Erfindung betrifft ferner die Anwendung der zuvor beschriebenen Übungsvorrichtung mit einer statischen Gefäßbettkontrastierung in einer radiologisch bildgebenden Technik, vorzugsweise der Magnetresonanztomographie (MRT), Computertomographie (CT), C-Arm Computertomographie (CACT), Rotationsangiographie (RAX) und/oder digitalen Radiographie (DX).

In einer weiteren Ausführungsform wird die zuvor beschriebene Übungsvorrichtung, welche eine dynamische Gefäßbettkontrastierung aufweist, in bildgebenden Verfahren, vorzugsweise der Magnetresonanztomographie (MRT), Computertomographie (CT), C-Arm Computertomographie (CACT), Rotationsangiographie (RAX), digitalen Radiographie (DX), Durchleuchtung (DL) und/oder digitalen Subtraktionsangiographie (DSA) angewendet.

Ferner betrifft der Einsatz der zuvor beschriebenen Übungsvorrichtung auch die Entwicklung, Erprobung und didaktische Vermittlung von bildbasierten Registrierungstechniken zur Bildfusion.

Die vorliegende Erfindung betrifft weiterhin ein Verfahren zur Abbildung statischer und/oder dynamischer Flüssigkeitsbewegungen innerhalb des Gefäßbettes einer zuvor beschriebenen Übungsvorrichtung. In einer Ausführungsform weist die Flüssigkeit innerhalb des Gefäßbettes eine Kontrastierung auf, um eine Abbildung statischer und/oder dynamischer Flüssigkeitsbewegungen in den Gefäßbetten in bestimmten bildgebenden Verfahren zu ermöglichen.

In einer Ausführungsform der vorliegenden Erfindung umfasst das Verfahren zur Abbildung einer statischen Flüssigkeitsbewegung innerhalb des Gefäßbettes einer zuvor beschriebenen Übungsvorrichtung folgende Schritte:
i) Auffüllung des Gefäßbettes der zuvor beschriebenen Übungsvorrichtung mittels eines Anschlusses ZI mit einer für die gewählte bildgebende Technik geeigneten Flüssigkeit, vorzugsweise wobei es sich um eine radiologische bildgebende Technik handelt unter Verwendung einer kontrastgebenden Flüssigkeit;
ii) Herauslassen der durch die Einfüllung der Flüssigkeit entweichenden Luft aus der Übungsvorrichtung mittels eines Auslasses ZO;
iii) Verschluss der Anschlüsse ZI und ZO durch welche Flüssigkeit in das Gefäßbett eingebracht wurde und die Luft herausgelassen wurde; und
iv) Darstellung der Übungsvorrichtung und/oder des kontrastierten Gefäßbettes mit der gewählten radiologisch bildgebenden Technik, vorzugsweise einer radiologisch bildgebenden Technik.

In einer weiteren Ausführungsform der vorliegenden Erfindung umfasst das Verfahren zur Abbildung der Übungsvorrichtung unter Verwendung eines durchströmten Gefäßbettes, vorzugsweise eines dynamisch-kontrastierten Gefäßbettes, folgende Schritte:
i) Anschluss einer Flüssigkeitspumpe und eines daran angeordneten Flüssigkeitsreservoirs an den Anschlusses ZI der Übungsvorrichtung;
i) Anschluss eines Abflusses an dem Anschlusses ZO, welcher mit dem Flüssigkeitsreservoir in Verbindung steht;
ii) Kontinuierliche Durchströmung des Gefäßbettes mit der über die Pumpe geförderten Flüssigkeit aus dem Flüssigkeitsreservoir innerhalb des Gefäßbettes zurück in das Flüssigkeitsreservoir;
iii) Einführung eines Kontrastmittels in den Flüssigkeitsfluss, wobei die Einführung vorzugsweise über einen Kontrastmittelinjektionsanschluss erfolgt; und
iv) Darstellung der Übungsvorrichtung und/oder des dynamisch-kontrastierten Gefäßbettes mit einer gewählten radiologisch bildgebenden Technik.

In einer bevorzugten Ausführungsform umfasst das Verfahren zur Abbildung der Übungsvorrichtung unter Verwendung eines durchströmten Gefäßbettes vor Einführung des Kontrastmittels (Schritt iii) als weiteren Schritt eine unkontrastierte Darstellung der Übungsvorrichtung und/oder des flüssigkeitsgefüllten Gefäßbettes mit einer bildgebenden Technik und/oder der zur Anwendung kommenden radiologisch bildgebender Technik, sofern im Anschluss an Letztere eine Subtraktionstechnik zur Anwendung gebracht wird. Besonders bevorzugt weist das Verfahren einen zusätzlichen Schritt v) auf, bei welchem eine Berechnung einer Subtraktionsbildgebung durch Subtraktion der unkontrastierten Darstellung aus der kontrastierten Darstellung erfolgt.

Die Schritte iii) und iv), d.h. die Einführung eines Kontrastmittels in den Flüssigkeitsfluss und die Darstellung der Übungsvorrichtung und/oder des dynamisch-kontrastierten Gefäßbettes mit einer gewählten radiologisch bildgebenden Technik werden in einer bevorzugten Ausführungsform zeitlich koordiniert, sodass abhängig von der Flüssigkeitsförderung der Pumpe, d.h. der Fördergeschwindigkeit der Flüssigkeit, eine Verdünnung der Flüssigkeit in Bezug auf das Kontrastmittel noch ausreichend für die bildgebende Technik ist.

In einer Ausführungsform der vorliegenden Erfindung umfasst das Verfahren die Anwendung von bildbasierten Registrierungstechniken zur Bildfusion, wobei folgende Schritte umfasst sind:
i) Abbildung der Übungsvorrichtung unter Verwendung einer statischen und/oder dynamischen Gefäßbettkontrastierung mittels Magnetresonanztomographie (MRT), Computertomographie (CT), C-Arm Computertomographie (CACT), Rotationsangiographie (RAX), digitaler Radiographie (DX), Durchleuchtung (DL) und/oder digitalen Subtraktionsangiographie (DSA);
ii) Digitale Übertragung der Abbildungsdaten auf das zur Anwendung von bildbasierten Registrierungstechniken gewählte Gerät, vorzugsweise ein Angiographiegerät;
iii) Abbildung der Übungsvorrichtung ohne und/oder mit Gefäßbettkontrastierung; und
iv) Anwendung mindestens einer bildbasierten Registrierungstechnik zur räumlichen Bildfusion der unter i) erzeugten mindestens einen Abbildung mit der unter iii) mindestens einen erzeugten Abbildung.

In einer besonderen Ausführungsform der vorliegenden Erfindung ist die mindestens eine bildbasierte Registrierungstechnik auf dem ausgewählten Gerät zur Bildfusion verfügbar.

Die Aufgabe wird weiterhin durch die Ausführungsformen in den Ansprüchen gekennzeichnet und durch die Ausführungen in der Beschreibung, den Beispielen und den Zeichnungen näher beschrieben.

### Abbildungen

- Fig. 1: Schematische Darstellung einer Aufsicht auf eine erfindungsgemäße Übungsvorrichtung.
- Fig. 2: Schematische Darstellung einer Ansicht von der Deckplatte auf eine erfindungsgemäße Übungsvorrichtung.
- Fig. 3: Schematische Darstellung einer Ansicht von der Grundplatte auf eine erfindungsgemäße Übungsvorrichtung.

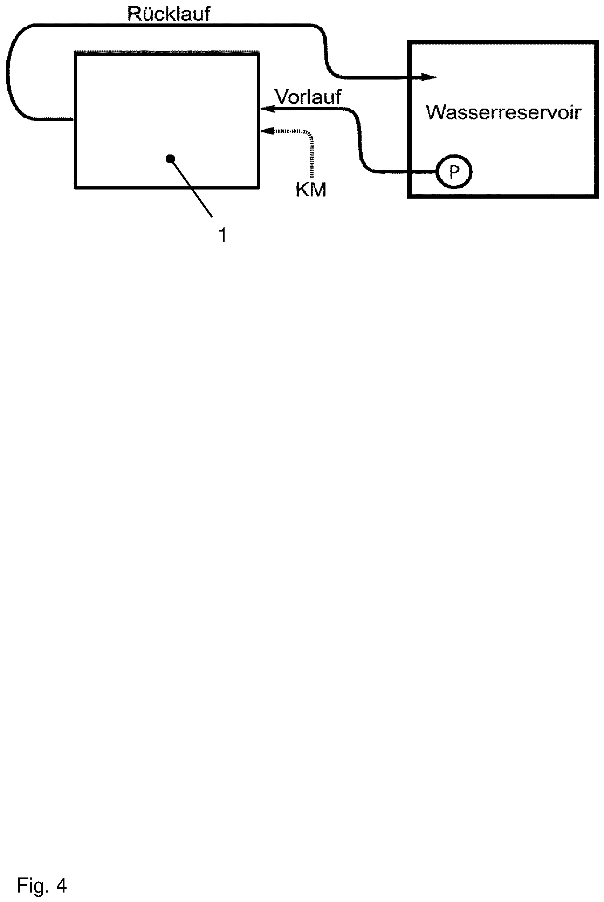

- Fig. 4: Skizze eines Gesamtaufbaus mit Wasserreservoir, Pumpe (P), Vorlauf, Kontrastmittelanschluss (KM), Übungsvorrichtung (1) und Rücklauf (Draufsicht).
- Fig. 5: Schematische Darstellung eines 3D-Rendering der 3D-Druckvorlage der Übungsvorrichtung, laterale (a) und frontale (b) Ansicht auf eine erfindungsgemäße Übungsvorrichtung. Anschluss ZI (ZI); Anschluss ZO (ZO), Kontrastmittelinjektionsanschluss (KMI); Kanal von der Deckplatte zum Hohlraum der stilisierten Wirbelkörper (WKK, 20); stilisierte Wirbelkörper mit ihren Querfortsätzen (WK, 22).
- Fig. 6: Schematische Darstellung eines 3D-Renderings der 3D-Druckvorlage des Gefäßbettes, seitliche (a) und frontale Ansicht (b). Darstellung der Abschnitte des Gefäßbetts (GB), bestehend aus dem zentralen Hauptschlagaderelement HSA mit insgesamt 4 Abschnitten: HSAₚᵣₒₓ, HSA_{zentral}, HSA_{red} und HSA_{dist}.

### Bezugszeichenliste

- 1: Übungsvorrichtung
- 2: Rückseite
- 3: Vorderseite
- 4: Deckplatte
- 5: Grundplatte
- 6: Kontrastmittelinjektionanschluss (KMI)
- 7: Anschluss ZI
- 8: Anschluss ZO
- 9: Proximales Hauptschlagaderelement (HSAₚᵣₒₓ)
- 10: zentrales Hauptschlagaderelement (HSA_{zentral})
- 11: Reduzierendes Hauptschlagaderelement (HSA_{red})
- 12: Distales Hauptschlagaderelement (HSA_{dist})
- 13: Kontrastmittelinjektionssystems (KMS)
- 14: Seitenast (SA)
- 15: Hauptschlagaderäquivalent (HSA)
- 16: Ableitungskanäle (AK)
- 17: Kontrastmittelzufuhrring (KMR)
- 18: Gefäßaufweitung
- 19: zuführender Kanal
- 20: zur Deckplatte hin offener Kanal
- 21: Gefäßbett
- 22: Objekte mit abweichender Röntgendichte und/oder MRT-Signalintensität (stilisierte Wirbelkörper)

### Detaillierte Darstellung der Erfindung

Die vorliegende Erfindung betrifft eine Übungsvorrichtung zur Simulation eines Gefäßbettes mit statischer und/oder dynamischer Flüssigkeitsbewegung, vorzugsweise zur Simulation einer kontrastierten statischen und/oder kontrastierten dynamischen Flüssigkeitsbewegung innerhalb des Gefäßbettes.

Der Begriff "Flüssigkeitsbewegung" beschreibt in der vorliegenden Erfindung die Bewegung der Flüssigkeit innerhalb des Gefäßbettes. Auch wenn keine Bewegung der Flüssigkeit vorhanden ist, d.h. keine Fließgeschwindigkeit messbar ist, wird hier von der Flüssigkeitsbewegung gesprochen. Der Begriff "dynamisch" beschreibt hierbei ein Gefäßbett, bei welchem die in das Gefäßbett eingefüllte Flüssigkeit sich innerhalb des Gefäßbettes bewegt, vorzugsweise dieses durchströmt. Der Begriff "statisch" beschreibt ein Gefäßbett, bei welchem die innerhalb des Gefäßbettes angeordnete Flüssigkeit, welche beispielsweise zuvor eingefüllt wurde, sich nicht in Bewegung befindet, d.h. es liegt eine statische Flüssigkeitsbewegung vor. Die Begriffe "kontrastiert" oder "Kontrastierung" beschreiben in der vorliegenden Erfindung den Zusatz mindestens eines Stoffes (Kontrastmittels) in die Flüssigkeit, die in das Gefäßbett eingeführt werden kann, welche die Darstellung von Strukturen und Funktionen bei bildgebenden Verfahren ermöglicht. Das Kontrastmittel oder Färbemittel kann auch Substanzen umfassen, die einer nicht kontrastierten Flüssigkeit, wie beispielsweise Wasser, zugefügt werden können. Als Kontrastmittel werden bei radiologischen bildgebenden Verfahren vorzugsweise Stoffe verwendet, die Röntgenstrahlen stärker oder schwächer absorbieren als normales Weichteilgewebe bzw. der Körper der Übungsvorrichtung. Kontrastmittel umfassen, sind jedoch nicht beschränkt auf Stoffe mit folgenden Eigenschaften, röntgenpositive oder röntgennegative Kontrastmittel, gasgefüllte Mikrobläschen-Kontrastmittel und/oder positive oder negative Magnetresonanztomografie-Kontrastmittel.

In einer Ausführungsform kann anstatt oder zusätzlich zur Flüssigkeit Gas in das Gefäßbett eingeleitet werden, sodass durch die Einbringung des Gases eine statische und/oder dynamische, vorzugsweise kontrastiert-statische und/oder kontrastiertdynamische Flüssigkeits- und/oder Gasbewegung innerhalb des Gefäßbettes simuliert werden kann.

Der Begriff "Gefäßbett" umfasst einen Gefäßverlauf und seinen Gefäßaufbau innerhalb eines bestimmten Körperbereichs bzw. Organs bzw. einen hierauf basierenden vereinfachten Verlauf. Der Gefäßaufbau beschreibt hierbei den Durchmesser der einzelnen Gefäßabschnitte, wobei der Durchmesser (Kaliber) zwischen den einzelnen Gefäßabschnitten variieren kann. Der Gefäßverlauf umfasst zentrale Gefäße sowie die Verästelung der Gefäße innerhalb bestimmter Körperregionen oder Organe und Ableitungskanäle zur Sicherstellung einer Zirkulation. Grundsätzlich wurde die Übungsvorrichtung für Gefäßbetten, insbesondere humane Gefäßbetten entwickelt, jedoch könnte die Erfindung auch für die Simulation der Gefäßbetten anderer Lebewesen, wie beispielsweise anderer Säugetiere, wie Hunde, Katzen oder Pferden Verwendung finden, in denen eine bestimmte Bildgebungs- oder Behandlungstechnik durchgeführt werden soll. Die Übungsvorrichtung bietet vielfältige Einsatzmöglichkeiten in der Ausbildung sowie in der Stärkung der eigenen Fähigkeiten in der Praxis. Insbesondere bei Abbildungs- und Behandlungstechniken, welche neu erlernt oder vertieft werden sollen, da sie beispielsweise selten durchgeführt werden, ist die Verwendung einer Übungsvorrichtung nützlich. In der folgenden Beschreibung wird die Erfindung der Einfachheit halber in Bezug auf das humane Gefäßbett beschrieben.

Radiologisch bildgebende Systeme, beispielsweise Angiographiegeräte - aber auch Computertomographen und Magnetresonanztomographen - ermöglichen heute weit über die reine Objektabbildung hinausgehende Funktionen. Hierzu zählt die bildbasierte Registrierung des Koordinatensystems des radiologisch bildgebenden Systems mit dem Koordinatensystem von im Vorfeld aufgenommenen Bilddaten aus beispielsweise der Computertomographie, Magnetresonanztomographie oder digitalen Radiographie (=Voraufnahmen) und die konsekutive räumliche Fusionierung der beiden Bilddatensätze. Durch eine solche Fusion kann die in den Voraufnahmen vorliegende Information ortsbezogen mit den Bildinformationen des radiologisch bildgebenden Systems kombiniert werden und diese inhaltlich ergänzen. In der folgenden Beschreibung wird die Erfindung der Einfachheit halber in Bezug auf die Nutzung am Angiographiegerät beschrieben.

Angiographiegeräte ermöglichen heute neben der Röntgendurchleuchtung zur Durchführung eines Eingriffs zahlreiche Navigationstechniken. Hierbei können zur Navigation sowohl registrierte Bilddaten, z.B. Voraufnahmen, als auch aktuelle durchleuchtungsgestützte Angiographiebilder genutzt werden. Die Anwendung dieser Navigationstechniken am Angiographiegerät ist trainingsintensiv, wird vorwiegend bei komplexen Eingriffen angewandt und setzt zum Erlernen an einem spezifischen Angiographiesystem die Anwendung der Navigationstechniken am Menschen oder einem geeigneten Phantom voraus.

Die vorliegende Übungsvorrichtung ist vorzugsweise derart ausgelegt, dass sie die Nutzung der zuvor genannten Techniken, wie die Abbildung in der Magnetresonanztomographie (MRT), Computertomographie (CT), C-Arm Computertomographie (CACT) und Rotationsangiographie (RAX) und die zweidimensionale Darstellung mittels digitaler Radiographie (DX), digitaler Subtraktionsangiographie (DSA) und/oder Durchleuchtung (DL) ermöglicht. Darüber hinaus ist sie zur Entwicklung und Erprobung von Bildregistrierungstechniken geeignet und kann zum Training dieser Techniken eingesetzt werden. Des Weiteren können mithilfe der Übungsvorrichtung vorzugsweise typische Navigationstechniken am Angiographiesystem entwickelt, erprobt, angewandt und trainiert werden. Anders als in bekannten Systemen ist der Vorteil der hiesigen Vorrichtung, dass eine Vorrichtung für alle bildgebenden Techniken verwendet werden kann. Die üblichen bekannten Übungsvorrichtungen umfassen Nachbildungen von Gefäßbäumen, die einen zentralen Einstrom aufweisen, an den Enden der Gefäßäste offen sind und in einem Aufnahmeraum angeordnet sind oder in einen solchen gelegt werden. Der Aufnahmeraum oder Behälter wird ebenso wie der Gefäßbaum mit einer Flüssigkeit gefüllt. Eine Flüssigkeitsbewegung wird bei derartigen Vorrichtungen dadurch erzeugt, dass die Flüssigkeit in den Einstrom oder den Aufnahmeraum an sich eingepumpt und aus dem Aufnahmeraum abgepumpt wird. Diese Vorrichtungen sind für die Erprobung von chirurgischen Techniken innerhalb des Gefäßbettes geeignet. Wird nun in einem solchen System ein flüssiges oder gasförmiges Kontrastmittel in den Einstrom zur Flüssigkeit eingebracht, entweicht dieses unmittelbar nach Füllung des Gefäßbaumes in den Aufnahmeraum und führt hier unerwünschte Kontraste herbei. Dieser Effekt verfälscht die Bilder der bildgebenden Techniken. Eine annährend realistische Bildgebung im Vergleich zum Körper eines Menschen oder Tieres ist daher bei diesen Systemen nicht möglich. Ferner ist es in solchen umspülten Systemen notwendig, dass für ein dynamisch-kontrastiertes Bild, die Nachbildung des Gefäßverlaufs, d. h. das Gefäßbett, von einer sehr großen Flüssigkeitsmenge umspült wird, um eine Überlagerung des Gefäßbettes während der Bildaufnahme durch die auch kontrastierte Umgebungs- oder Spülflüssigkeit durch Verdünnung zu verringern. Bei den Systemen mit einem flüssigkeitsgefüllten Behälter kommt es üblicherweise innerhalb kürzester Zeit zu einer fortschreitenden Kontrastierung der Umgebungsflüssigkeit und somit zu einer dadurch kompromittierten Abbildung der Gefäßstrukturen in den bildgebenden Verfahren.

Eine statische Kontrastierung führt ferner bei der Anordnung der bekannten Systeme zu einer Kontrastierung der Flüssigkeit im Aufnahmeraum bzw. dem Behälter, die das Gefäßbett umspült, da die nachgebildeten Gefäße im Aufnahmeraum bzw. im Behälter enden. Die hiesige Erfindung hingegen ermöglicht, dass nur das Gefäßbett und gegebenenfalls die kommunizierenden Strukturen, wie beispielsweise die Ableitungskanäle (AK) kontrastiert werden, wodurch alle bildgebenden Techniken, beispielsweise Magnetresonanztomographie (MRT), Computertomographie (CT), C-Arm Computertomographie (CACT), Rotationsangiographie (RAX), die zweidimensionale Darstellung mittels digitaler Radiographie (DX) sowie Durchleuchtung (DL) mit einer Vorrichtung gleichzeitig oder direkt hintereinander eingesetzt werden können und ein annährend realistisches Bild ergeben, da eine Gefäßabgrenzbarkeit in den Bildgebungstechniken erhalten bleibt.

Die erfindungsgemäße Vorrichtung kommt ohne ein umliegendes Aufnahmebehältnis aus, das den Körper mit Flüssigkeit umgibt, daher ist es im Gegensatz zu den bekannten Systemen möglich, die Übungsvorrichtung in einer kompakten Bauform darzustellen und somit eine Miniaturisierung im Vergleich zu den bekannten Vorrichtungen zu ermöglichen. Ein weiterer Vorteil ist ferner natürlich die Strahlenhygiene. Aufgrund der Positionierung der technisch notwendigen flüssigkeitsgefüllten Aufnahmeräume in den bekannten Systemen im Primärstrahlengang wird unnötige Streustrahlung ausgebildet, welche sich auf die Exposition der beteiligten Personen als auch auf die bildgebenden Verfahren nachteilig auswirkt. Durch die verringerte Streustrahlung durch den Aufbau der hiesigen Vorrichtung wird eine bessere Bildqualität erreicht sowie eine geringere Emission und Exposition für den Untersucher realisiert.

Systeme bei denen die Nachbildungen eines Gefäßverlaufs in einem flüssigkeitsgefüllten Behältnis gelagert sind, können ferner nicht auf einfache Weise entlüftet werden. Durch den Aufbau der hiesigen Vorrichtung ist dies innerhalb weniger Minuten möglich, zumeist unter 5 min, wobei Flüssigkeit direkt über einen Anschluss ZI (7) in das Gefäßbett geleitet wird. Ohne eine solche Entlüftung der Vorrichtung ist eine Bildgebung mittels der zuvor genannten Techniken nicht möglich oder mit Fehlern behaftet.

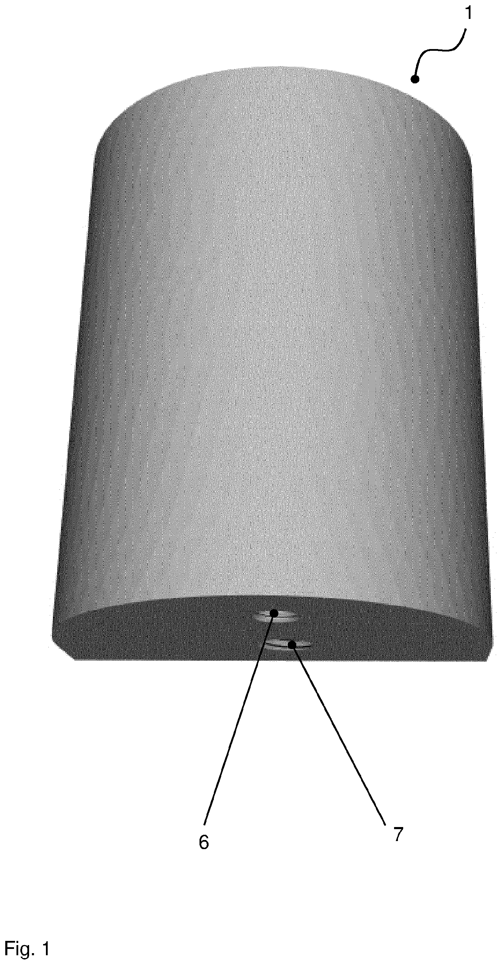

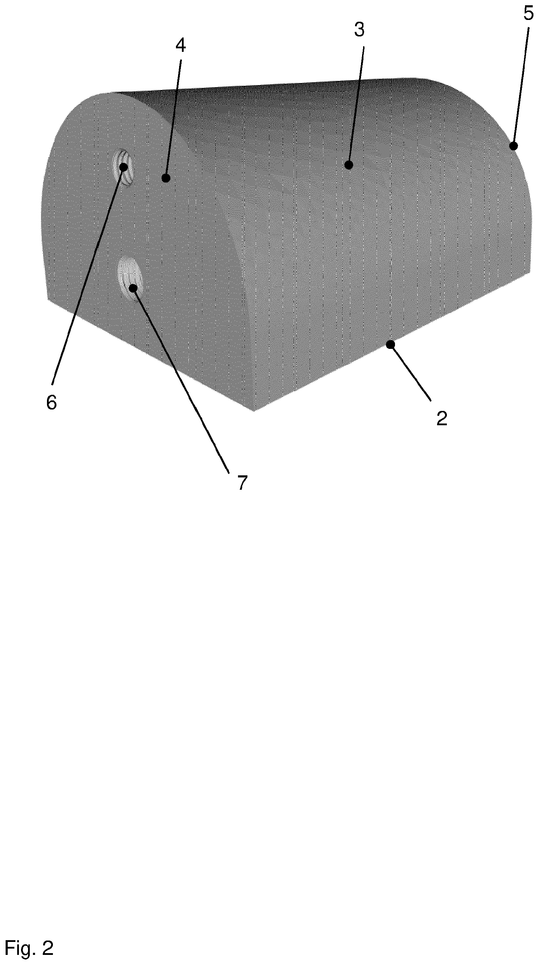

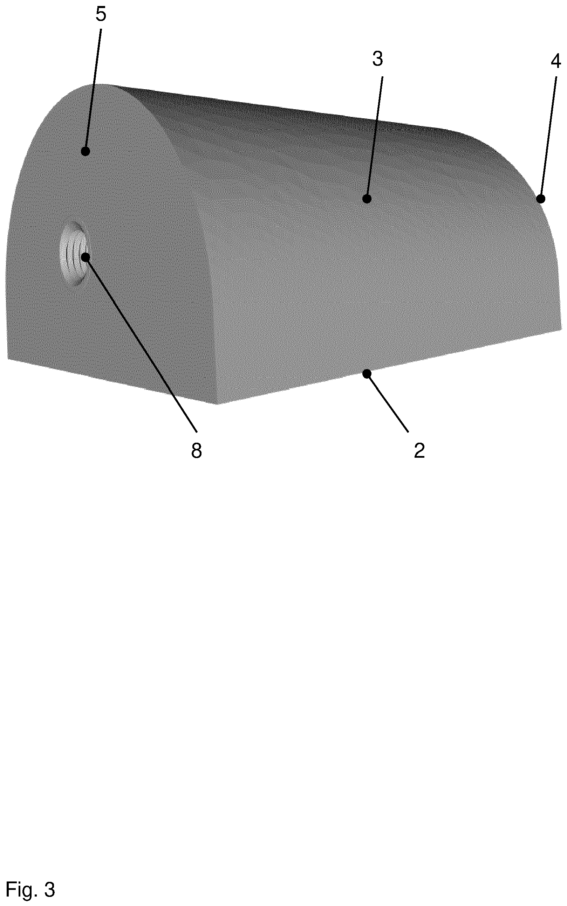

Die Übungsvorrichtung umfasst daher eine Nachbildung eines Gefäßbettes, welches vorzugsweise eine Nachbildung eines humanen Gefäßbettes einer bestimmten Region darstellt. Das Gefäßbett ist innerhalb eines wasserdichten Körpers angeordnet, welcher als Gehäuse angesehen werden kann und vorzugsweise eine flache Auflagefläche, im Folgenden auch Rückseite (2) genannt, umfasst. Die Rückseite (2) oder Auflagefläche dient der sicheren Lagerung der Vorrichtung, insbesondere soll durch die flache Auflagefläche verhindert werden, dass die Vorrichtung sich bei Übungen bewegt. Ferner sollen wiederholbare Bedingungen geschaffen werden. Die Vorderseite (3) der Übungsvorrichtung kann jede erdenkliche Form aufweisen, jedoch weist die Vorderseite (3) der Einfachheit halber eine halbzylindrische Form auf, die an die Rückseite (2) und zwei Endplatten (4, 5) angrenzt, wie der Fig. 1, 2 und 3 zu entnehmen ist. Die Endplatten (4, 5) sind seitlich an dem Körper angeordnet und vorzugsweise flach ausgebildet, sodass potentielle Anschlüsse in den Bereichen der Endplatten (4, 5) möglich sind.

In einer Ausführungsform der vorliegenden Erfindung umfasst eine Endplatte einen Anschluss ZI (7) für die Einbringung einer Zirkulation einer Flüssigkeit innerhalb des Gefäßbettes und vorzugsweise einen weiteren Anschluss für eine Kontrastmittelinjektion (6), welcher vorzugsweise oberhalb des Anschlusses ZI (7) gelegen ist. Im Folgenden wird die Endplatte, welche die Anschlüsse zur Zirkulation (Anschluss ZI, 7) und zur Kontrastmittelinjektion (KMI) aufweist, als Deckplatte (4) bezeichnet. Die der Deckplatte (4) gegenüberliegende Endplatte, im Folgenden auch als Grundplatte (5) bezeichnet, weist in einer Ausführungsform der vorliegenden Erfindung einen Schlauchanschluss ZO (Anschluss ZO, 8) auf, der einen Ausgang für die Flüssigkeit der Zirkulation darstellt. Bei den Schlauchanschlüssen kann es sich um bekannte Schlauchanschlüsse handeln, wobei vorzugsweise ein Innengewinde in den Körper eingebracht wird. In einer besonders bevorzugten Ausführungsform wird kein separates Gewinde in den Körper eingebracht, sondern die Bereiche in den Endplatten, an welchen entsprechende Anschlüsse vorhanden sein sollen, weisen bereits entsprechende integrierte Ausnehmungen auf, die vorzugsweise ein Innengewinde darstellen und eine Verbindung mit einem Schlauchanschluss mit einem komplementären Außengewinde ermöglichen. Die Größe der Anschlussöffnungen ist abhängig von der verwendeten Pumpe, jedoch weisen ZI und ZO vorzugsweise einen Innendurchmesser von 16 mm auf. Die Kontrastmittelinjektion (KMI) ist auf Grund der geringeren Durchflussmengen etwas kleiner und weist vorzugsweise einen Innendurchmesser von 12 mm auf.

Der Körper der Übungsvorrichtung besteht vorzugsweise aus einem soliden und wasserdichten Material, wobei eine Herstellung des Körpers mittels dreidimensionalen (3D) Druckes möglich sein sollte, um die Kosten der Herstellung relativ gering zu halten. Das für den Körper verwendete Material soll weiterhin die Eigenschaft besitzen, dass es in der Computertomographie (CT) homogen fett- bis weichteildichte Dichtewerte aufweist. Der Körper weist in der Computertomographie (CT) somit homogen hypodense Eigenschaften auf. Als hypodens werden bei bildgebenden Verfahren, wie beispielsweise der CT, Bildbereiche beschrieben, die eine verminderte optische "Dichte" besitzt. Der Begriff "hypodens" kann sich dabei entweder auf die Dichte des umliegenden Gewebes beziehen oder auf die "normale" Dichte der Struktur, die betrachtet wird. Eine solche homogen fett- bis weichteildichte Röntgendichte liegt vorzugsweise im Bereich von -30 bis 100 Houndsfieldeinheiten bei einer 120 kV Röhrenspannung, besonders bevorzugt im Bereich von -30 bis 100 Houndsfieldeinheiten bei einer Röhrenspannung von 120 kV. Der Körper weist vorzugsweise oder alternativ ein in der Magnetresonanztomographie im Vergleich zu Fett hypointenses Signalverhalten auf. Bei dem verwendeten Material handelt es sich in einer Ausführungsform um ein rigides Kunstharz, welches ein leichtes Gewicht aufweist und somit eine Mobilität der Übungsvorrichtung gewährleistet. Eine zusätzliche Transparenz des Körpers kann des Weiteren einen Trainingsvorteil darstellen, da das Gefäßbett und der Flüssigkeitsfluss beobachtet werden kann. In diesem Zusammenhang ist daher in einer Ausführungsform der Körper der Vorrichtung aus einem transparenten Material gefertigt. In einer bevorzugten Ausführungsform wird dem Kunstharz jedoch ein geeigneter Farbstoff zugesetzt, um die Transparenz aufzuheben und die Sichtbarkeit des Gefäßbetts einzuschränken. Der Körper und das mit Wasser gefüllte Gefäßbett weisen ohne Kontrastierung in einer bevorzugten Ausführungsform keine voneinander erheblich abweichende Röntgendichte auf. Bei der Verwendung von unterschiedlichen Materialien oder Materialen unterschiedlicher Hersteller kann es zwar leichte Abweichungen in der Röntgendichte geben, diese sind jedoch marginal und spielen bei der Durchleuchtung und Angiographie keine relevante Rolle. Ferner ist bei einer Füllung des Gefäßbettes, d.h. der Hohlräume innerhalb des Körpers, mit Wasser bei der Durchleuchtung das Gefäßbett im Vergleich zum Körper nicht sichtbar bzw. kontrastbildend.

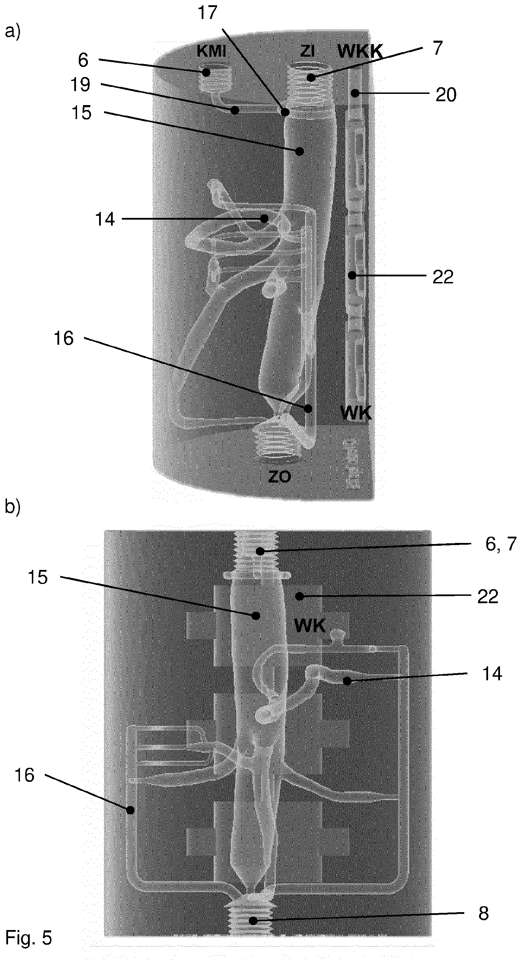

Im Bereich der Rückseite (2) der Übungsvorrichtung sind in einer Ausführungsform mehrere Objekte (22) in den Körper integriert, die stilisierte Wirbelkörper mit ihren Querfortsätzen darstellen, wie der Fig. 5 zu entnehmen ist. Die Objekte (22) sind nebeneinander am Boden der Rückseite angeordnet und mit einem Füllmaterial gefüllt das im Vergleich zum Körper und/oder dem Gefäßbett eine abweichende Röntgendichte aufweist. Als abweichende Röntgendichte werden hierbei Materialen bezeichnet, die eine höhere Röntgendichte als der Körper und/oder das Gefäßbett aufweisen oder Materialen, die eine geringere Röntgendichte als der Körper und/oder das Gefäßbett aufweisen. Entscheidend für die Wahl des Materials ist, dass die Objekte innerhalb der bildgebenden Techniken vom restlichen Material des Körpers und/oder des Gefäßbettes unterschieden werden können. Dementsprechend ist der Unterschied zwischen den Röntgendichten der Materialen des Körpers und/oder Gefäßbettes zum Objekt (22) vorzugsweise größer als 15% in Houndsfieldeinheiten bei einer Röhrenspannung von 120 kV. Bei dem Füllmaterial innerhalb der Objekte (22) kann es sich um jedes bekannte Material, auch ein Gas handeln, in einer bevorzugten Ausführungsform handelt es sich bei dem Füllmaterial jedoch um aushärtendes Silikon oder dasselbe Material aus dem der Körper gefertigt ist, welches mit Substanzen versetzt wurde, welche die Röntgendichte verändern. Bei den Substanzen handelt es sich vorzugsweise um Substanzen höher Röntgendichte, vorzugsweise Bariumsulfatsalz. Die Röntgendichte des mindestens einen Objektes (22) liegt in einer besonders bevorzugten Ausführungsform im Bereich von 400-1600 Houndsfieldeinheiten bei einer Röhrenspannung von 120 kV in der Computertomographie (CT), wodurch die Objekte (22) auch in anderen radiologischen bildgebenden Techniken sichtbar sind. In einer besonders bevorzugten Ausführungsform handelt es sich bei den Objekten (22) um drei rechteckige zur Oberseite abgerundete Objekte. Die Objekte (22) stehen vorzugsweise durch eine längliche Form miteinander in Verbindung, wobei jedes der Objekte ferner zu den Seiten hin Fortsätze aufweist. Die Objekte (22) innerhalb des Körpers dienen dem Zweck der Abbildung konturgebender Strukturen, die auch innerhalb des menschlichen Körpers auftreten. Das mindestens eine Objekt (22) kann auch als sogenanntes Registrierungsobjekt dienen, da es in den radiologisch-bildgebenden Techniken der CT, CACT, RAX, DX, DSA und DL sichtbar ist. Wird als Füllmaterial der Objekte (22) beispielsweise aushärtendes Silikon als Ausführungsform gewählt, ist zusätzlich eine Sichtbarkeit der Objekte in der MRT gegeben. Diese Sichtbarkeit des mindestens einen Objekts (22) erlaubt, dass die Bildfusion von Bildinformationen aus verschiedenen radiologischen bildgebenden Techniken ermöglicht wird, wodurch unter Verwendung des Objektes (22) und/oder des dreidimensionalen Gefäßbettes (21) die Übungsvorrichtung zur Entwicklung, Erprobung oder Erlernung von Registrierungstechniken durch den Anwender verwendet werden kann. In einer bevorzugten Ausführungsform weist das mindestens eine Objekt (22) eine höhere Röntgendichte als der Körper sowie das wassergefüllte Gefäßbett, ohne und mit kontrastierter Flüssigkeitsbewegung, auf, wodurch eine Simulation der digitalen Subtraktionsangiographie möglich ist, bei der eine Subtraktion von beispielsweise Knochen, dargestellt durch das mindestens eine Objekt (22) von dynamisch-kontrastierten Gefäßstrukturen erfolgt. Ferner ist das mindestens eine Objekt (22) in den erfindungsgemäßen Vorrichtungen im Körper in einer besonders bevorzugten Ausführungsform immer an der exakt gleichen Stelle angeordnet, wodurch Bilder der bildgebenden Techniken für sämtliche Vorrichtungen der Serie als repräsentativ angesehen werden und somit Registrierungen von CT, MRT oder CACT-Bildern durch kommerziell verfügbare zweidimensionale oder dreidimensionale Registrierungstechniken angewandt werden können, ohne dass eine individuelle Bildgebung einer jeden Vorrichtung notwendig ist.

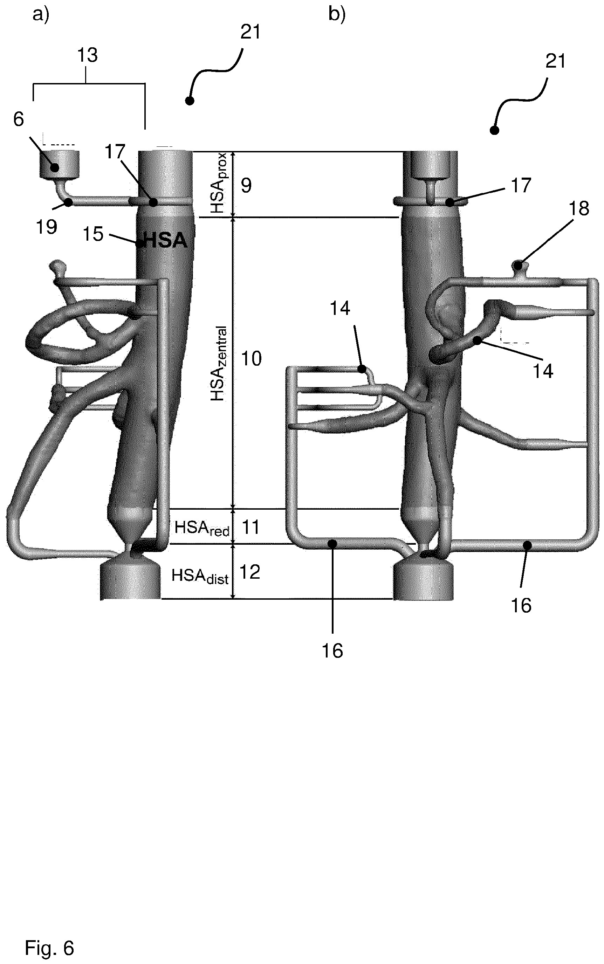

Das Gefäßbett (21), welches innerhalb des Körpers angeordnet ist, ist dreidimensional aufgebaut und mit den mindestens zwei Anschlussöffnungen, d.h. der Einbringungsöffnung (Anschluss ZI, 7) und der Ausgangsöffnung (Anschluss ZO, 8) der Flüssigkeit, verbunden. In einer Ausführungsform der vorliegenden Erfindung umfasst das Gefäßbett ein Hauptschlagaderäquivalent (HSA, 15), mindestens einen Seitenast (SA, 14) und mindestens einen Ableitungskanal (AK, 16), wie der Fig. 6 zu entnehmen ist. Das Gefäßbett sowie die Gefäßkonturen der Übungsvorrichtung sind in einer bevorzugten Ausführungsform in einer bildgebenden Darstellung, wie beispielsweise einer radiologischen Durchleuchtung, bei Füllung mit Wasser und ohne Einbringung von Kontrastmittel mit dem menschlichen Auge nicht vom umgebenden Körper abgrenzbar.

Das zentrale Hauptschlagaderäquivalent (15) besteht in einer bevorzugten Ausführungsform aus vier Abschnitten. Der proximale zylindrische Abschnitt (HSAₚᵣₒₓ, 9) beginnt hierbei unmittelbar unterhalb der Deckplatte (4) und weist besonders bevorzugt eine Länge von 2 cm auf. Der proximale zylindrische Abschnitt (HSAₚᵣₒₓ, 9) wird über den Einlassanschluss der Zirkulation (Anschluss ZI, 7) mit einem Pumpenausgang verbunden, wodurch das Hauptschlagaderäquivalent (HSA, 15) über die vorzugsweise extern angeordnete Pumpe mit Flüssigkeit durchströmt werden kann. An den HSAₚᵣₒₓ (9) ist ein zentraler Anteil des HSA (HSA_{zentral}, 10) angeordnet. Der HSA_{zentral} (10) weist vorzugsweise eine Länge von 10 cm auf. Dem HSA_{zentral} (10) folgt der kurzstreckige trichterförmige Reduktionsabschnitt des HSA (HSA_{red}, 11). Der Abschnitt HSA_{red} (11) weist eine Länge von 0,5 bis 2 cm, vorzugsweise eine Länge von 1,5 cm auf. Dem HSA_{red} (11) schließt sich zur Grundplatte (5) hin der distale Abschnitt des HSA (HSA_{dist}, 12) an. Dieser weist vorzugsweise eine Länge von 1 cm auf. Der HSA_{dist} ist am Ausgangsanschluss für die Flüssigkeit der Zirkulation (Anschluss ZO, 8) angeordnet, welcher mittels eines Schlauches mit einem Wasserreservoir verbunden ist.

Vom HSA_{zentral} (10) gehen sich zum Teil verzweigende Seitenäste (14) ab, welche den Einstrom bilden und vorzugsweise stilisiert den arteriellen Anteil des menschlichen Gefäßsystems darstellen. In einer Ausführungsform weisen die Seitenäste (14) segmentale Einengungen und/oder Aufweitungen (18) auf, wodurch Gefäßerkrankungen simuliert werden sollen. In einer bevorzugten Ausführungsform werden die Seitenäste (14) derart gestaltet, dass die darin enthaltenen Verzweigungen gezielt derart platziert wurden, dass sich diese in einer frontalen Darstellung durch auftretende Überlagerungsphänomene nur unzureichend als ebensolche Aufzweigungen abgrenzen lassen, wie der Fig. 6 zu entnehmen ist. Eine solche bildgebende Eigenschaft kann zur Darstellung des Nutzens von dreidimensionalen Gefäßdarstellungen oder von Schrägprojektionen in der projektionsradiographischen Angiographie didaktisch genutzt werden.

Um einen Fluss bzw. Einstrom von Wasser aus dem Hauptschlagaderäquivalent (15) in die Seitenäste (14) zu ermöglichen, werden die Seitenäste in einer Ausführungsform an ihren äußersten Enden, d.h. dem Ende das von dem Verzweigungspunkt am Hauptschlagaderäquivalent (15) am weitesten entfernt ist, mit Ableitungskanälen (AK, 16) verbunden. Die Ableitungskanäle (AK, 16) verlaufen in Richtung der Grundplatte (5) und münden in den HSA_{dist} (12). Die Länge und/oder der Durchmesser der Ableitungskanäle (16) sind derart bemessen, dass der summierte Flusswiderstand der Seitenäste (14) und der Ableitungskanäle (16) derart im Verhältnis zum Flusswiderstand des Hauptschlagaderäquivalents (15) steht, dass eine homogene Flussverteilung der über den Einlass (Anschluss ZI, 7) eingebrachten Flüssigkeit auf die Seitenäste (14) und das Hauptschlagaderäquivalent (15) erfolgt, wobei der Flusswiderstand des Hauptschlagaderäquivalents (15) vorzugsweise über den Abschnitt HSA_{red} (11) bestimmt wird, der wie zuvor beschrieben eine sanduhrförmige Verengung aufweist, die zur Kaliberreduktion, d.h. Verringerung des Innendurchmessers (Kalibers) führt.

In einer Ausführungsform der vorliegenden Erfindung steht das Gefäßbett in Verbindung mit dem Kontrastmitteleinbringungssystem (KMS, 13). Dieses Kontrastmittelinjektionssystem (KMS) umfasst mehrere Kanäle, die in den HSAₚᵣₒₓ (9) münden, vorzugsweise 1,8 cm unterhalb der Deckplatte (4). Das Kontrastmitteleinbringungssystem (KMS, 13) umfasst hierbei einen Anschluss zur Kontrastmittelinjektion (KMI, 6) und einem Kontrastmittelzufuhrring (KMR, 17). Der Kontrastmittelzufuhrring (KMR, 17) ist in einer bevorzugten Ausführungsform ein ringförmiger Hohlraum, der den HSAₚᵣₒₓ (9) umgibt. Um der strömenden Flüssigkeit keinen unnötigen oder einen möglichst geringen Flusswiderstand entgegensetzen, sind Zuführleitungen mit großen Durchmessern vorteilhaft, da diese einen Betrieb der Vorrichtung mit geringem Einspritzdruck erlauben. Würde die Einbringung des Kontrastmittels in den Flüssigkeitsstrom durch Beimischung in den Zuführleitungen außerhalb der Vorrichtung erfolgen, so werden größere Mengen Kontrastmittel benötigt, um die einströmende Flüssigkeit homogen zu kontrastieren. Bei einer Kontrastierung mittels eines Katheters in der Vorrichtung, ist ein Vorlauf zur Vermischung der Flüssigkeit und des Kontrastmittels im HSA notwendig, um eine homogene Kontrastierung herbeizuführen, wodurch eine größere Bauweise erforderlich sein würde. Die vorliegende Erfindung umfasst daher eine ringförmige Kontrastmittelzuführung (KMR, 17), durch welche eine Einspritzung des Kontrastmittels mit geringem Druck erfolgen kann und eine unmittelbare Durchmischung erfolgt.

Ferner umfasst der Kontrastmittelzufuhrring (17) vorzugsweise mehrere Öffnungen, die in Richtung des HSAₚᵣₒₓ (9) gerichtet sind und eine Zuführung von Kontrastmittel in das Hauptschlagaderäquivalent (15) ermöglichen. Bei den Öffnungen handelt es sich bevorzugt um schlitzförmige Kontrastmittelzufuhraussparungen, die eine Abgabe eines Kontrastmittels in das Hauptschlagaderäquivalent (15) erlauben. Die seitliche Anordnung der Kontrastmittelzufuhröffnungen führt zu einer turbulenten Durchmischung der durch das Hauptschlagaderäquivalent (15) strömenden Flüssigkeit mit dem zugeführten Kontrastmittel, wodurch eine homogene Kontrastierung der Flüssigkeit bereits im HSAₚᵣₒₓ (9) sichergestellt wird. Aufgrund einer solchen gesteuerten Verteilung bereits innerhalb des HSAₚᵣₒₓ (9) und somit auf das Hauptschlagaderäquivalent (15) und die Seitenäste (14) wird eine ebenso homogene Kontrastmittelverteilung im gesamten Gefäßbett erreicht. In einer bevorzugten Ausführung weist der Kontrastmittelzufuhrring vier Kontrastmittelzufuhröffnungen mit einem Winkelabstand von 90 Grad auf. Ein zuführender Kanal (19) zum Kontrastmittelzufuhrring (17) verbindet diesen mit dem Anschluss zur Kontrastmittelinjektion (KMI, 6) und ermöglicht eine Kontrastmitteleinspritzung in das Hauptschlagaderäquivalent (15) über die Kontrastmittelzufuhröffnungen. Mithilfe der seitlichen Schlitze, die dem Flüssigkeitsstrom entgegengerichtet gewinkelt ausgerichtet sind, wird eine homogene und nahezu zeitgleiche bzw. direkt aufeinander folgende Kontrastierung des zentraler Anteils des HSA (HSA_{zentral}, 10) und der Seitenäste (14) erreicht. Des Weiteren wird durch eine solche Anordnung kein zusätzliches Material, wie beispielsweise Katheter für die Kontrastmitteleinbringung, benötigt, wodurch Einwegmaterial eingespart und Müll vermieden wird. Ein solches Kontrastmitteleinführsystem erlaubt auch den Einsatz von gasförmigen Kontrastmitteln wie Raumluft oder CO₂, wodurch weitestgehend auf jodhaltige Kontrastmittel verzichtet werden kann.

Mithilfe des Kontrastmittelsystems (KMS, 13) ist es möglich gezielt eine Kontrastierung herbeizuführen und somit in einer Ausführungsform auch eine kontrollierte dynamische Kontrastierung der Flüssigkeit innerhalb des Gefäßbettes zu erlauben, die eine dreidimensionale Darstellung der Übungsvorrichtung und seiner Komponenten in den bildgebenden Techniken ohne Überlagerung der Gefäßstrukturen im zeitlichen Verlauf ermöglicht, wobei die kontrastierte Flüssigkeit, vorzugsweise durch gezielte seitliche Abführung, abgeleitet wird. In einer Ausführungsform der vorliegenden Erfindung sind, beispielsweise im Falle der dynamischen Kontrastierung, zunächst das Gefäßbett und anschließend die kommunizierenden Strukturen, insbesondere die Ableitungskanäle (AK, 16) kontrastiert. Dadurch bleibt eine Gefäßabgrenzbarkeit in allen Bildgebungstechniken, insbesondere in der Magnetresonanztomographie (MRT), Computertomographie (CT), C-Arm Computertomographie (CACT), Rotationsangiographie (RAX), der zweidimensionalen Darstellung mittels digitaler Radiographie (DX) und der Durchleuchtung (DL), zu allen Zeitpunkten der Bildaufnahme erhalten.

Ein weitere Vorteile der kontrollierten Einspeisung der Kontrastmittelflüssigkeit sind das kleine Volumen des Kontrastmittels als auch der Spülflüssigkeit sowie die kontrollierte Entsorgung der kontrastierten und somit kontaminierten Spülflüssigkeit.. Die Vorrichtung ermöglicht eine vollständige und zeitgleiche Kontrastierung des gesamten Hauptschlagaderäquivalent (HSA, 15) und der Seitenäste in der Angiographie mit nur 10 ml Kontrastmittel. Eine ausreichend homogene und über die Aufnahmezeit der CT-Angiographie, C-Arm CT oder Rotationsangiographie anhaltende Kontrastierung ist mit nur 20 ml Kontrastmittel in der vorliegenden Vorrichtung möglich. Damit wird die Kontamination der Spülflüssigkeit minimiert. Das geringe Volumen der Spülflüssigkeit von nur 1 bis 2 Litern erlaubt eine ressourcenschonende und dennoch rechtskonforme Entsorgung. Die Entsorgungskosten werden maßgeblich durch das Volumen bestimmt, daher stellt die gewählte technische Umsetzung eine umweltfreundliche und kostenoptimierte Lösung dar.

Um einen Austritt des Kontrastmittels sowie der Flüssigkeit innerhalb des Gefäßbettes in den Körper zu vermeiden, sind die Verbindungen zwischen den einzelnen Abschnitten des Hauptschlagaderäquivalents (15), des Kontrastmittelinjektionssystems (KMS) sowie zwischen dem Hauptschlagaderäquivalent (15) und dem Kontrastmittelinjektionssystem (KMS) flüssigkeitsdicht abgeschlossen. Zuflüsse und/oder Abflüsse von Flüssigkeiten und/oder Kontrastmitteln sind die Einlassanschlussöffnung ZI (Anschluss ZI, 7), der Ausganganschluss ZO (Anschluss ZO, 8) sowie der Anschluss zur Kontrastmittelinjektion (Anschluss KMI, 6).

Die erfindungsgemäße Vorrichtung ermöglicht eine überlagerungsfreie Darstellung von Gefäßstrukturen. Um eine homogene, das heißt gleichzeitig erreichte vollständige, und zeitgerechte Kontrastierung des Gefäßbettes zu realisieren, wurde mittels Diameter- und Längenoptimierung der summierte Flusswiderstand des Gefäßbettes und der nachgeschalteten Ableitungskanäle (AK, 16) derart gestaltet, dass eine zeitgleiche und homogene Kontrastierung in allen Gefäßästen des Hauptschlagaderäquivalent (15) einsetzt. Daher weisen die inneren Strukturen, wie bereits zuvor beschrieben vorzugsweise folgenden Aufbau auf:
Der zentrale Anteil des HSA (HSA_{zentral}, 10) der an den proximalen zylindrischen Abschnitt (HSAₚᵣₒₓ, 9) anschließt weist eine Länge von 10 cm auf. Der proximale zylindrische Abschnitt (HSAₚᵣₒₓ, 9), der unmittelbar unterhalb der Deckplatte (4) beginnt, weist eine Länge von 2 cm auf. Der Reduktionsabschnitt des HSA (HSA_{red}, 11) folgt dem HSA_{zentral} (10) und weist eine Länge von 1,5 cm auf. Zur Grundplatte (5) hin liegt der distale Abschnitt des HSA (HSA_{dist}, 12), der vorzugsweise eine Länge von 1 cm aufweist und an den Ausgangsanschluss angeschlossen ist. Mögliche Seitenäste (14) sind an ihren äußersten Enden, d.h. dem Ende das von dem Verzweigungspunkt am Hauptschlagaderäquivalent (15) am weitesten entfernt ist, mit Ableitungskanälen (AK, 16) verbunden, welche in Richtung der Grundplatte (5) verlaufen und in den HSA_{dist} (12) münden.

Die Übungsvorrichtung wird in einer bevorzugten Ausführungsform durch eine dreidimensionale Segmentierung auf Grundlage eines computertomographischen Datensatzes erstellt, der als Vorlage für das Gefäßbett der Übungsvorrichtung dient. In einer bevorzugten Ausführungsform handelt es sich um eine dreidimensionale Segmentierung der menschlichen Bauchschlagader und derer Seitenäste (Truncus coeliacus, Arteria mesenterica superior, Nierenarterien). Um die bildgebenden Eigenschaften der Übungsvorrichtung zu erreichen und die Flusseigenschaften des zu bildenden Hauptschlagaderäquivalents (15) und der Seitenäste (14) der Flüssigkeitsverteilung und deren Durchmischungsverhalten mit einem Kontrastmittel anzupassen, wird die Segmentierung des Gefäßbettes, vorzugsweise der Bauchschlagader, in ein stilisiert antropomorphes Hauptschlagaderäquivalent (15) angepasst. Die Segmentierung der HSA_{zentral} und der menschlichen Seitenäste erfolgt in einer bevorzugten Ausführungsform in einer 3D Bildbearbeitungssoftware und einer rechnerbasierten Konstruktionssoftware (CAD-Software), wobei das somit bearbeitete Bild mittels STL-Schnittstelle zu einer digitalen 3D-Druckvorlage fusioniert wird. In einer besonders bevorzugten Ausführungsform wird die Übungsvorrichtung mittels eines dreidimensionalen Druckes hergestellt, wobei als Material vorzugsweise ein Harz, besonders bevorzugt ein laserlichthärtendes Kunstharz dient. Um Objekte (22) mit abweichender Röntgendichte (9), vorzugsweise höherer Röntgendichte zum Körper und/oder dem Gefäßbett, wie beispielsweise stilisierte Wirbelkörper, in den Körper einführen zu können, wird in einer Ausführungsform ein Hohlraum, der der Position der Objekte entspricht, mit einem zur Deckplatte hin offenen Kanal (20) versehen, um nach dem Ausdruck die Füllung des Hohlraums zu ermöglichen. Nach Füllung des Hohlraums mit einem Füllmaterial, vorzugsweise einem Material mit abweichender Röntgendichte zum Körper und/oder dem Gefäßbett, besonders bevorzugt mit höherer Röntgendichte von 400-1600 Houndsfieldeinheiten, wird der Kanal vorzugsweise mit dem Füllmaterial oder dem Material der Übungsvorrichtung, das zur Herstellung des Körpers verwendet wird, verschlossen.

Die zuvor beschriebene Übungsvorrichtung und das diesbezügliche Herstellungsverfahren führen in einer besonders bevorzugten Ausführungsform zu einer Übungsvorrichtung, die folgende antropomorphe Eigenschaften aufweist:
(i) Die Übungsvorrichtung weist eine dreidimensionale Gefäßstruktur mit menschenähnlicher Konfiguration auf;
(ii) Die Gefäße der Übungsvorrichtung weisen Aufzweigungen auf, wodurch Effekte der dreidimensionalen Gefäßdarstellung auf den Verlauf eines Eingriffs abgebildet werden können;
(iii) Die Gefäßkontur der Übungsvorrichtung ist in einer Durchleuchtung bei Füllung mit Wasser und ohne Einbringung von Kontrastmittel mit dem menschlichen Auge nicht vom umgebenden Körper abgrenzbar;
(iv) Das Gefäßbett weist vorzugsweise typische Änderungen der Gefäßweiten aufgrund von Gefäßerkrankungen auf, wie beispielsweise Aufweitungen und/oder Einengungen;
(v) Die Übungsvorrichtung weist eine dem Blutfluss, vorzugsweise dem Blutfluss des menschlichen Körpers, hinreichend ähnliche Durchströmung des Gefäßbettes auf, um eine Kontrastmitteldarstellungen durch direkte Kontrastmittelinjektion zu ermöglichen;
(vi) Die Übungsvorrichtung weist geeignete Eigenschaften zur Anwendung von Bildfusionstechniken auf, wobei die Vorrichtung vorzugsweise
   - in der Magnetresonanztomographie (MRT), der Computertomographie (CT), der C-Arm CT (CACT), der dreidimensionalen Rotationsangiographie (RAX), der digitalen Radiographie (DX), digitalen Subtraktionsangiographie (DSA) und Durchleuchtung (DL) einsetzbar ist;
   - Strukturen aufweist, die in der Magnetresonanztomographie (MRT) und/oder der Computertomographie (CT), der C-Arm CT (CACT), der dreidimensionalen Rotationsangiographie (RAX), der digitalen Radiographie (DX), digitalen Subtraktionsangiographie (DSA) und Durchleuchtung (DL) sichtbar sind;
   - die Strukturen derart konfiguriert sind, dass sie eine Aussage zur Stellung der Übungsvorrichtung im Raum, d.h. Rotation in allen drei Ebenen, ermöglichen;
(vii) Die Übungsvorrichtung ermöglicht eine kontrollierte Einbringung von geeigneten Kontrastmitteln in das Gefäßbett; und
(viii) Hohe Reproduzierbarkeit der Abbildung der Übungsvorrichtung im CT und/oder im MRT.

Die vorliegende Erfindung betrifft ferner die Anwendung der zuvor beschriebenen Übungsvorrichtung mit einer statischen Gefäßbettkontrastierung in einer radiologisch bildgebenden Technik, vorzugsweise der Magnetresonanztomographie (MRT), Computertomographie (CT), C-Arm Computertomographie (CACT), Rotationsangiographie (RAX) und/oder digitalen Radiographie (DX). Hierbei wird die Übungsvorrichtung über den Anschluss ZI (7) mit einem, für die gewählte radiologische bildgebende Technik geeigneten, vorzugsweise verdünnten, Kontrastmittel befüllt. Die in der Übungsvorrichtung vorhandene Luft entweicht vorzugsweise über einen am Anschluss ZO (8) angeschlossenen Schlauch. Ist die Übungsvorrichtung vollständig mit Kontrastmittel gefüllt, werden die Anschlüsse ZI (7) und ZO (8) mit geeigneten Mitteln verschlossen. Der Anschluss für die Kontrastmittelinjektion (6) bleibt bei dieser Anwendung vorzugsweise ungenutzt. Nach Füllung der Übungsvorrichtung erfolgt eine statische Darstellung des kontrastierten Gefäßbettes mit den genannten radiologischen bildgebenden Techniken. Zum Abschluss kann in einer Ausführungsform das Gefäßbett durch Öffnen der Anschlüsse ZI (7) und ZO (8) entleert werden und vorzugsweise mit einem geeigneten Mittel, wie Wasser, gespült werden.

In einer weiteren Ausführungsform wird die zuvor beschriebene Übungsvorrichtung, welche eine dynamische Gefäßbettkontrastierung aufweist, in bildgebenden Verfahren, vorzugsweise der Magnetresonanztomographie (MRT), Computertomographie (CT), C-Arm Computertomographie (CACT), Rotationsangiographie (RAX), digitalen Radiographie (DX), Durchleuchtung (DL) und/oder digitalen Subtraktionsangiographie (DSA) angewendet.

Hierbei wird an den Anschluss ZI (7) der Übungsvorrichtung der Pumpenausgang einer Flüssigkeitspumpe angebracht, wobei die Flüssigkeitspumpe mit einem Flüssigkeitsreservoir, vorzugsweise Wasserreservoir, in Verbindung steht. Eine entsprechende Verbindung kann ein Schlauch sein oder ähnliche Verbindungen. Die Flüssigkeitspumpe kann eine Pumpe in einem Flüssigkeitsreservoir sein oder eine Pumpe umfassen, die außerhalb eines Flüssigkeitsreservoirs angeordnet ist. Die Pumpenförderleistung sollte in einer bevorzugten Ausführungsform 1 bis 10 Liter pro Minute betragen, wodurch eine kontinuierliche Durchströmung des Gefäßbettes erfolgt. In einer besonders bevorzugten Ausführungsform kann die Flussrate der Pumpe an die Bedürfnisse der Gefäßdarstellung angepasst werden. Die in die Übungsvorrichtung am Anschluss ZI (7) geführte Flüssigkeit aus dem Flüssigkeitsreservoir durchströmt das im Körper der Übungsvorrichtung enthaltene Gefäßbett und verlässt am Anschluss ZO (8) die Übungsvorrichtung. In einer bevorzugten Ausführungsform wird die am Ausgang ZO (8) abgegebene Flüssigkeit mithilfe eines daran angeschlossenen Schlauches zurück in das Flüssigkeitsreservoir geleitet. Eine solche kontinuierliche Durchströmung der Übungsvorrichtung simuliert den Blutfluss. In einer weiteren Ausführungsform wird die Übungsvorrichtung in einem bildgebenden Gerät, wie beispielsweise einem Angiographiegerät, Computertomographen oder Magnetresonanztomographen positioniert. Über den Kontrastmittelinjektionsanschluss (6) wird für die entsprechende radiologische bildgebende Technik ein geeignetes Kontrastmittel für die Dauer der Bildaufnahme über den Kontrastmittelinjektionsanschluss (6) in die Übungsvorrichtung injiziert, wodurch eine vorübergehende homogene Kontrastierung des in der Übungsvorrichtung vorhandenen Gefäßbettes generiert wird. In einer bevorzugten Ausführungsform wird mit dem Ausströmen der kontrastierten Flüssigkeit über den Anschluss ZO (8) das Kontrastmittel analog zum menschlichen Blutvolumen im Flüssigkeitsreservoir stark verdünnt, wodurch mehrere sequenzielle Gefäßdarstellungen ermöglicht werden, bis die zur Durchströmung genutzte Flüssigkeit aufgrund einer bemerkbaren Kontrastierung getauscht werden muss. Nach Abschluss der Nutzung wird die Flüssigkeit des Reservoirs vorzugsweise entsorgt und die Übungsvorrichtung mit einem geeigneten Mittel, wie beispielsweise Wasser gespült, um Verklebungen des Kontrastmittels in der Übungsvorrichtung zu verhindern.

Ferner betrifft der Einsatz der zuvor beschriebenen Übungsvorrichtung auch die Entwicklung, Erprobung und didaktische Vermittlung von bildbasierten Registrierungstechniken zur Bildfusion. Wie zuvor zur Vorrichtung ausgeführt, ist die Übungsvorrichtung vorzugsweise aus einem Material gefertigt, dass in der Computertomographie gering röntgendicht ist und in der Magnetresonanztomographie signalarm ist. In der flachen Rückseite der Übungsvorrichtung ist vorzugsweise mindestens ein Objekt (22) mit einer abweichenden Röntgendichte, vorzugsweise höheren Röntgendichte, verglichen mit dem Material des Körpers angeordnet, die stilisierte Wirbelkörper mit ihren Querfortsätzen darstellen sollen. In einer Ausführungsform wird das mindestens eine Objekt (22) mit einem silikonbasierten und mit Bariumsulfat versetzten Material gefüllt, um neben der Sichtbarkeit in den röntgenstrahlenbasierten bildgebenden Verfahren (CT, CACT, RAX, DX, DSA und DL) auch eine Sichtbarkeit in der MRT zu gewährleisten. Erfolgt nun die Abbildung der Übungsvorrichtung ohne Füllung des Gefäßbaumes und/oder unter Anwendung einer statischen und/oder dynamischen Gefäßkontrastierung, so lässt sich in den erzeugten Abbildungen der stilisierte Wirbelkörper bzw. das Objekt (22) derart abgrenzen, dass er als Objekt zur bildbasierten Objektregistrierung im Hinblick auf die Stellung im Raum genutzt werden kann. Diese Sichtbarkeit kann zur Registrierung verschiedener Abbildungen aus verschiedenen Abbildungsmodalitäten, z.B. der Computertomographie und der Durchleuchtung oder auch der Magnetresonanztomographie und der C-Arm Computertomographie genutzt werden. Durch die Rigidität der Übungsvorrichtung ist eine relevante zwischenzeitliche Verformung nahezu ausgeschlossen.

Die vorliegende Erfindung betrifft weiterhin ein Verfahren zur Abbildung statischer und/oder dynamischer Flüssigkeitsbewegungen im Gefäßbett einer zuvor beschriebenen Übungsvorrichtung. In einer Ausführungsform weist die Flüssigkeit innerhalb des Gefäßbettes eine Kontrastierung auf, um eine Abbildung statischer und/oder dynamischer Flüssigkeitsbewegungen in Gefäßbetten in bestimmten bildgebenden Verfahren zu ermöglichen.

In einer Ausführungsform der vorliegenden Erfindung umfasst das Verfahren zur Abbildung einer statischen Flüssigkeitsbewegung innerhalb des Gefäßbettes einer zuvor beschriebenen Übungsvorrichtung folgende Schritte:
a) Auffüllung des Gefäßbettes der Übungsvorrichtung mittels eines Anschlusses ZI (7) mit einer für die gewählte radiologische bildgebende Technik geeigneten Flüssigkeit umfassend ein Kontrastmittel;
b) Herauslassen der durch die Einfüllung der Flüssigkeit entweichenden Luft aus der Übungsvorrichtung mittels eines Auslasses ZO (8);
c) Verschluss der Anschlüsse ZI (7) und ZO (8) durch welche Flüssigkeit in das Gefäßbett eingebracht wurde und die Luft herausgelassen wurde; und
d) Statische Darstellung des kontrastierten Gefäßbettes mit bildgebenden Techniken, vorzugsweise radiologisch bildgebenden Techniken.

In einer bevorzugten Ausführungsform handelt es sich bei dem verwendeten Kontrastmittel vorzugsweise um verdünnte lod-haltige und/oder Gadolinium-haltige Lösungen. In einer weiteren Ausführungsform wird als Endschritt das Gefäßbett mit einer geeigneten Lösung gespült, um Verschmutzungen innerhalb des Gefäßbettes zu beseitigen.

In einer weiteren Ausführungsform betrifft das Verfahren die Abbildung der Übungsvorrichtung unter Verwendung eines durchströmten Gefäßbettes, vorzugsweise eines dynamisch-kontrastierten Gefäßbettes folgende Schritte:
a) Anschluss einer Flüssigkeitspumpe und eines daran angeordneten Flüssigkeitsreservoirs an den Anschlusses ZI (7) der Übungsvorrichtung;
b) Anschluss eines Abflusses an dem Anschlusses ZO (8), welcher mit dem Flüssigkeitsreservoirs in Verbindung steht;
c) Kontinuierliche Durchströmung des Gefäßbettes mit der über die Pumpe geförderten Flüssigkeit aus dem Flüssigkeitsreservoir innerhalb des Gefäßbettes zurück in das Flüssigkeitsreservoir;
d) Einführung eines Kontrastmittels in den Flüssigkeitsfluss, wobei die Einführung vorzugsweise über einen Kontrastmittelinjektionsanschluss (KMI, 6) erfolgt; und
e) Dynamische Darstellung des kontrastierten Gefäßbettes mit bildgebenden Techniken, vorzugsweise radiologisch bildgebenden Techniken.

In einer Ausführungsform des Verfahrens umfasst die kontinuierliche Durchströmung des Gefäßbettes eine Flussrate von 1 bis 10 Liter pro Minute. In einer besonders bevorzugten Ausführungsform handelt es sich bei der Flüssigkeit um Wasser. Das Kontrastmittel wird vorzugsweise für die Dauer der Bildaufnahme über den Kontrastmittelinjektionsanschluss (6) in die Übungsvorrichtung injiziert, wodurch eine vorübergehende homogene Kontrastierung des in der Übungsvorrichtung vorhandenen Gefäßbettes generiert wird. In einer bevorzugten Ausführungsform wird mit dem Ausströmen der kontrastierten Flüssigkeit über den Anschluss ZO (8) das Kontrastmittel analog zum menschlichen Blutvolumen im Flüssigkeitsreservoir stark verdünnt, wodurch mehrere sequenzielle Gefäßdarstellungen ermöglicht werden, bis die zur Durchströmung genutzte Flüssigkeit aufgrund einer bemerkbaren Kontrastierung getauscht werden muss. Nach Abschluss der Nutzung wird die Flüssigkeit des Reservoirs vorzugsweise entsorgt und die Übungsvorrichtung mit einem geeigneten Mittel, wie beispielsweise Wasser gespült, um Verklebungen des Kontrastmittels in der Übungsvorrichtung zu verhindern.

Ein alternatives Verfahren umfasst in einer Ausführungsform die Anwendung von bildbasierten Registrierungstechniken zur Bildfusion, wobei folgende Schritte umfasst sind:
a) Erstellung eines Gefäßbettes mit statischer Flüssigkeitsbewegung in einer der zuvor beschriebenen Übungsvorrichtungen oder eines durchströmten Gefäßbettes, mit oder ohne Kontrastierung;
b) Abbildung der Übungsvorrichtung in der Computertomographie (CT), der C-Arm CT (CACT), der Magnetresonanztomographie (MRT), der Rotationsangiographie (RAX), der Digitalen Radiographie (DX), der Digitalen Subtraktionsangiographie (DSA) oder Durchleuchtung (DL)
c) Übertragung der unter b) erzeugten Überlagerungsabbildung auf ein zum Training zur Anwendung von bildbasierten Registrierungstechniken gewähltes Gerät;
d) Abbildung der Übungsvorrichtung ohne und/oder mit Gefäßbettkontrastierung; und
e) Anwendung mindestens einer bildbasierten Registrierungstechnik zur räumlichen Bildfusion der unter a) erzeugten mindestens einen Abbildung mit der unter d) mindestens einen erzeugten Abbildung.

Bei dem für die bildbasierten Registrierungstechniken gewählten Gerät in Schritt c) handelt es sich vorzugsweise um ein Angiographiegerät. Bei dem Angiographiegerät erfolgt besonders bevorzugt eine C-Arm computertomographische Darstellung (CACT) oder eine Durchleuchtung in zwei Ebenen. Die Anwendung mindestens einer bildbasierten Registrierungstechnik zur räumlichen Bildfusion in Schritt e) umfasst vorzugsweise die Anwendung einer Registrierungssoftware des entsprechend genutzten Angiographiegerätes, um die in der Überlagerungsabbildung sichtbaren Objekte (22) mit den in der Durchleuchtung (DL) oder C-Arm computertomographischen Abbildungen (CACT) sichtbaren Objekten (22) in Deckung zu bringen, um daraus eine Registrierungsmatrix zu erzeugen. Die Registrierungsmatrix wird anschließend zur korrekten Überlagerung der in den Überlagerungsabbildungen enthaltenen Bildinformationen verwendet. Als Überlagerungsabbildungen werden hierbei die unter Schritt b) entstehenden Abbildungen bezeichnet.

In einer besonderen Ausführungsform der vorliegenden Erfindung ist die mindestens eine bildbasierte Registrierungstechnik auf dem ausgewählten Gerät zur Bildfusion verfügbar.

Diese und andere Ausführungsformen der vorliegenden Erfindung werden in der Beschreibung und den Beispielen offenbart und sind durch diese umfasst. Die in der vorstehenden Beschreibung und in den Ansprüchen genannten Merkmale sind weiterhin in einer beliebigen Auswahl kombinierbar und die im Rahmen der Erfindung sinnvollen Merkmalskombinationen als offenbart zu betrachten. Weitere Literatur über bekannte Materialien, Verfahren und Anwendungen die in Übereinstimmung mit der vorliegenden Erfindung verwendet werden können, können aus öffentlichen Bibliotheken und Datenbanken, beispielsweise unter Verwendung elektronischer Geräte aufgerufen werden. Ein vollständigeres Verständnis der Erfindung kann durch Bezugnahme auf die Figuren und Beispiele erhalten werden, die zum Zweck der Illustration bereitgestellt wurden und den Umfang der Erfindung nicht beschränken sollen.

## Patentansprüche

1. Übungsvorrichtung zur Simulation eines Gefäßbettes mit statischer, dynamischer, kontrastiert-statischer und kontrastiert-dynamischer Flüssigkeitsbewegung innerhalb des Gefäßbettes zur Darstellung in bildgebenden Techniken, umfassend eine Nachbildung eines Gefäßbettes (21), das innerhalb eines Körpers (1) angeordnet ist, wobei direkt am Körper (1) zwei Öffnungen zum Anschluss (7,8) oder Befüllung angeordnet sind, um einen Flüssigkeitsdurchfluss durch das Gefäßbett (21) zu ermöglichen und wobei die Vorrichtung eine flache Auflagefläche (2) aufweist, in deren Bereich innerhalb der Vorrichtung mindestens ein Objekt (22) einer abweichenden Röntgendichte im Vergleich zum Körper (1) und des Gefäßbettes (21) angeordnet ist.

2. Übungsvorrichtung nach Anspruch 1, wobei die Vorrichtung zwei Anschlüsse (7, 8) für den einen Flüssigkeitsdurchfluss an gegenüberliegenden Seiten des Körpers, nämlich der Deckplatte (4) und dem Grundplatte (5), angeordnet sind.

3. Übungsvorrichtung nach Anspruch 1 oder 2, wobei der Körper aus einem in der Computertomographie (CT) homogen hypodens und in der Magnetresonanztomographie hypointensen Material gefertigt ist, vorzugsweise wobei das Material ein Kunstharz ist.

4. Übungsvorrichtung nach einem der Ansprüche 1 bis 3, wobei das mindestens eine Objekt (22) einer abweichenden Röntgendichte
a) die Form von stilisierten Wirbelkörpern mit Querfortsätzen aufweist;
b) eine höhere Röntgendichte als der Körper und/oder das Gefäßbett aufweist, wobei die Röntgendichte von 500-1600 Houndsfieldeinheiten in der Computertomographie (CT) beträgt;
c) ferner eine höhere magnetresonanztomographische Signalintensität zum Körper und/oder dem Gefäßbett aufweist; und/oder
d) mit weiteren baugleichen Objekten in Verbindung steht, vorzugsweise wobei es sich um insgesamt drei Objekte (22) handelt.

5. Übungsvorrichtung nach einem der Ansprüche 1 bis 4, wobei das Gefäßbett einen dreidimensionalen Aufbau aufweist und ein zentrales Hauptschlagaderäquivalent (15), mindestens einen Seitenast (14) und mindestens einen Ableitungskanal (16) umfasst.

6. Übungsvorrichtung nach einem der Ansprüche 1 bis 5, wobei
a) das Hauptschlagaderäquivalent (15) aus vier Abschnitten besteht,
i) einem proximalen zylindrischen Abschnitt (HSAₚᵣₒₓ, 9), der unmittelbar an die Deckplatte (4) anschließt und vorzugsweise eine Länge von 2 cm aufweist;
ii) einem an den HSAₚᵣₒₓ (9) anschließenden zentralen Abschnitt (HSA_{zentral}, 10), der vorzugsweise eine Länge von 10 cm aufweist;
iii) einem an den HSA_{zentral} (10) folgen Abschnitt HSA_{red} (11), der zu einer Kaliberreduktion führt und vorzugsweise eine Länge von über 1,5 cm aufweist; und
iv) einem distalen Abschnitt HSA_{dist} (12), welcher an den Anschluss ZO (8) in der Grundplatte (5) anschließt und vorzugsweise eine Länge von 1 cm aufweist;
b) der mindestens eine Seitenast (14) stilisiert den arteriellen Anteil des menschlichen Gefäßsystems darstellt und vorzugsweise segmentale Einengungen und/oder Aufweitungen (18) aufweist; und

7. Übungsvorrichtung nach einem der Ansprüche 1 bis 6, wobei der mindestens eine Ableitungskanal (16) an einer Seite mit dem äußeren Ende des mindestens einen Seitenastes (14) verbunden ist und am anderen Ende der Kanalführung in den distalen Abschnitt HSA_{dist} (12) mündet, wobei vorzugsweise die Länge und/oder der Durchmesser des mindestens einen Ableitungskanals (16) derart ausgebildet ist, dass der summierte Flusswiderstand des mindestens einen Seitenastes (14) und des mindestens einen Ableitungskanals (16) derart im Verhältnis zum Flusswiderstand des Hauptschlagaderäquivalents (15) steht, dass eine homogene Flussverteilung, der über den Anschluss ZI (7) eingebrachten Flüssigkeit, auf den mindestens einen Seitenast (14) und das Hauptschlagaderäquivalent (15) erfolgt.

8. Übungsvorrichtung nach einem der Ansprüche 1 bis 7, wobei oberhalb des Anschlusses ZI (7) ein Anschluss für eine Kontrastmittelinjektion (6) eines Kontrastmitteleinbringungssystem (KMS) angeordnet ist.

9. Übungsvorrichtung nach Anspruch 8, wobei das Kontrastmitteleinbringungssystem (KMS) ferner einen Kontrastmittelzufuhrring (17) mit Öffnungen umfasst, welcher durch eine Verbindung mit dem Gefäßbett die Einführung eines Färbemittels in das Gefäßbett ermöglicht.

10. Übungsvorrichtung nach Anspruch 8 oder 9, wobei der Kontrastmittelzufuhrring (17)
a) 1,8 cm unterhalb der Deckplatte (4) mit dem HSAₚᵣₒₓ (9) in Verbindung steht;
b) einen ringförmigen Hohlraum ausbildet, der den HSAₚᵣₒₓ (9) umgibt; und/oder
c) ein zuführender Kanal (19) den Kontrastmittelzufuhrring (17) mit dem Anschluss zur Kontrastmittelinjektion (6) verbindet.

11. Übungsvorrichtung nach einem der Ansprüche 8 bis 10, wobei die Öffnungen des Kontrastmittelzufuhrrings (17) in Richtung des HSAₚᵣₒₓ (9) gerichtet sind, wobei diese vorzugsweise als schlitzförmige Kontrastmittelzufuhraussparungen ausgebildet sind.

12. Anwendung der Vorrichtung nach einem der Ansprüche 1 bis 11 in einer statischen Angiographie, dynamischen Angiographie, 3D-Angiographie und/oder ihrem Einsatz in Registrierungstechniken.

13. Verfahren zur Abbildung statischer und/oder dynamischer Flüssigkeitsbewegungen innerhalb von Gefäßbetten und/oder Registrierungstechnik unter Verwendung einer Übungsvorrichtung nach Anspruch 1 bis 11 umfassend in der Abbildung der Übungsvorrichtung unter Verwendung eines Gefäßbettes mit statischer Flüssigkeitsbewegung folgende Schritte:
i) Auffüllung des Gefäßbettes der Übungsvorrichtung mittels eines Anschlusses ZI (7) mit einer für die gewählte radiologische bildgebende Technik geeigneten Flüssigkeit, vorzugsweise wobei es sich um eine radiologische bildgebende Technik handelt unter Verwendung einer kontrastgebenden Flüssigkeit;
ii) Herauslassen der durch die Einfüllung der Flüssigkeit entweichenden Luft aus der Übungsvorrichtung mittels eines Auslasses ZO (8);
iii) Verschluss der Anschlüsse ZI (7) und ZO (8) durch welche Flüssigkeit in das Gefäßbett eingebracht wurde und die Luft herausgelassen wurde; und
iv) Darstellung der Übungsvorrichtung und/oder des kontrastierten Gefäßbettes mit der gewählten radiologisch bildgebenden Technik, vorzugsweise einer radiologisch bildgebenden Technik.

14. Verfahren zur Abbildung statischer und/oder dynamischer Flüssigkeitsbewegungen innerhalb von Gefäßbetten und/oder Registrierungstechnik unter Verwendung einer Übungsvorrichtung nach Anspruch 1 bis 11, wobei in der Abbildung der Übungsvorrichtung unter Verwendung eines durchströmten Gefäßbettes folgende Schritte:
i) Anschluss einer Flüssigkeitspumpe und eins daran angeordneten Flüssigkeitsreservoirs an den Anschlusses ZI (7) der Übungsvorrichtung;
ii) Anschluss eines Abflusses an dem Anschlusses ZO (8), welcher mit dem Flüssigkeitsreservoirs in Verbindung steht;
iii) Kontinuierliche Durchströmung des Gefäßbettes mit der über die Pumpe geförderten Flüssigkeit aus dem Flüssigkeitsreservoir innerhalb des Gefäßbettes zurück in das Flüssigkeitsreservoir;
iv) Einführung eines Kontrastmittels in den Flüssigkeitsfluss, wobei die Einführung vorzugsweise über einen Kontrastmittelinjektionsanschluss (6) erfolgt; und
v) Darstellung der Übungsvorrichtung und/oder des dynamisch-kontrastierten Gefäßbettes mit einer gewählten radiologisch bildgebenden Technik.

15. Verfahren zur Abbildung statischer und/oder dynamischer Flüssigkeitsbewegungen innerhalb von Gefäßbetten und/oder Registrierungstechnik unter Verwendung einer Übungsvorrichtung nach Anspruch 1 bis 11, wobei die Anwendung von bildbasierten Registrierungstechniken zur Bildfusion folgende Schritte umfasst:
i) Abbildung der Übungsvorrichtung unter Verwendung einer statischen und/oder dynamischen Gefäßbettkontrastierung mittels Magnetresonanztomographie (MRT), Computertomographie (CT), C-Arm Computertomographie (CACT), Rotationsangiographie (RAX), digitaler Radiographie (DX), Durchleuchtung (DL) und/oder digitalen Subtraktionsangiographie (DSA);
ii) Digitale Übertragung der Abbildungsdaten auf das zur Anwendung von bildbasierten Registrierungstechniken gewählte Gerät;
iii) Abbildung der Übungsvorrichtung ohne und/oder mit Gefäßbettkontrastierung; und
iv) Anwendung mindestens einer bildbasierten Registrierungstechnik zur räumlichen Bildfusion der unter i) erzeugten mindestens einen Abbildung mit der unter iii) mindestens einen erzeugten Abbildung.
